# EUROPEAN PATENT SPECIFICATION

(11) **EP 3 486 120 B1**
(45) Date of publication and mention of the grant of the patent: **17.06.2020**
(21) Application number: 18203204.5
(22) Date of filing: 29.10.2018
(51) Int. Cl.: B60R 9/048, B60R 9/10

(54) **IMPROVED CYCLE CARRIER**
VERBESSERTER FAHRRADTRÄGER
SUPPORT DE CYCLE AMÉLIORÉ

(30) Priority: 16.11.2017 IT 201700131284 U
(43) Date of publication of application: 22.05.2019
(73) Proprietor: F.LLI MENABO' S.R.L., 42025 Cavriago (Reggio Emilia) (IT)
(72) Inventor: SALSI, Andrea, 42011 Bagnolo in Piano Reggio Emilia (IT)
(74) Representative: Gagliardelli, Fabrizio

(56) References cited:
- DE-U1- 29 519 438
- DE-U1-202005 012 254

## Description

This invention relates to a roof-mounted cycle carrier with increased utility. Cycle carriers are known which are mounted on the roof bars which can be fixed to the roof of the automobile.

A prior art cycle carrier comprises a profile which is anchored transversely to the bars and is provided with an upper groove, which receives the tyres of the rear wheel of the bicycle.

This type of cycle carrier has had great success on the market and is therefore in great demand in various countries.

A difficulty encountered by the manufacturers and distributors of these products is the fact that the dimensions of the profiles of these cycle carriers are not easily managed by the logistics firms, who deliver these products.

In effect, the most common size of the pallets is 80x120 cm, whilst the profiles are at least 1300 cm long; thus, for the purposes of delivering the cycle carriers, the manufacturers are forced to use special solutions with consequent added costs.

DE202005012254 discloses a bicycle carrier, which includes two segments joined by mean of a joining element; the segments contact the joining element at the same side of the latter.

The technical purpose which forms the basis of the invention is therefore to provide a roof cycle carrier which is simpler and less costly to despatch. This aim is achieved by the cycle carrier made according to claim 1.

Further features and advantages of this invention are more apparent in the detailed description below, with reference to a preferred, non-restricting, embodiment of a cycle carrier as illustrated in the accompanying drawings, in which:
- Figures 1 and 2 are axonometric views of a support of the cycle carrier according to a first embodiment of the invention, seen from above and below, respectively;
- Figure 3 is a schematic axonometric view of two cycle carriers mounted on the roof of a vehicle;

- Figure 4 is a view of two segments which make up the support of Figures 1 and 2, arranged side by side;
- Figures 5 and 6 are exploded views of the support of the preceding drawings, seen from different points;
- Figure 7 is an axonometric view, partly exploded, of a detail of the invention; and
- Figures 8 and 9 are axonometric views which show a second embodiment not according to the invention, both exploded and assembled.

With reference to the accompanying drawings, the numeral 1 denotes a roof cycle carrier made according to the invention.

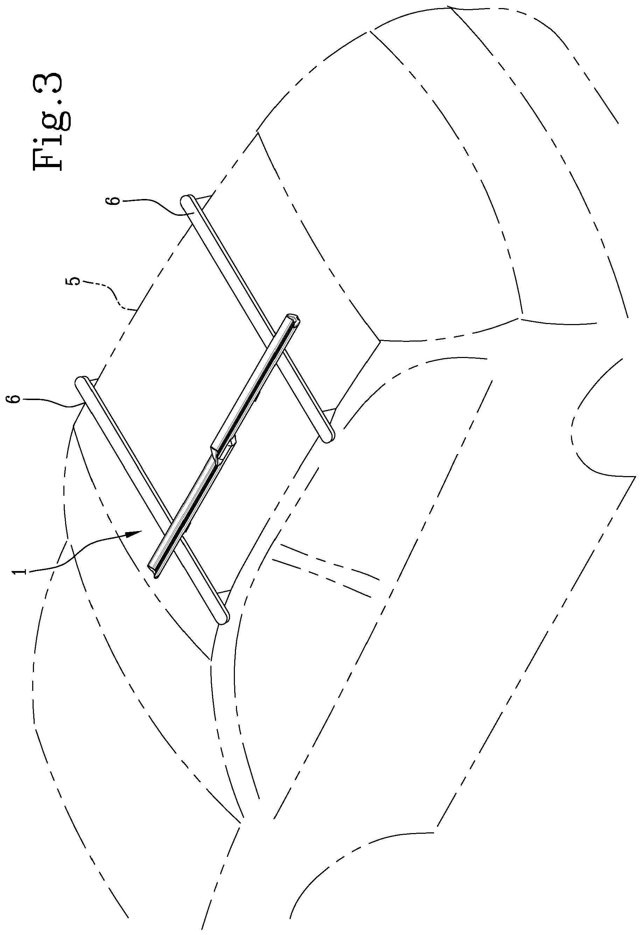

The cycle carrier 1 proposed is designed to be mounted on the roof of a motor vehicle 5, preferably anchored so that it rests on the so-called "roof bars" 6, which are well known in the sector of carrying accessories for motor vehicles (see Figure 3).

The invention comprises one or more elongate support elements 10, each designed to receive at least one of the tyres of a bicycle.

Each support 1 of the cycle carrier comprises a plurality of segments 10, for example two, each of which may comprise a respective profile, preferably made of aluminium or other metal, which has a groove above for receiving the tyre.

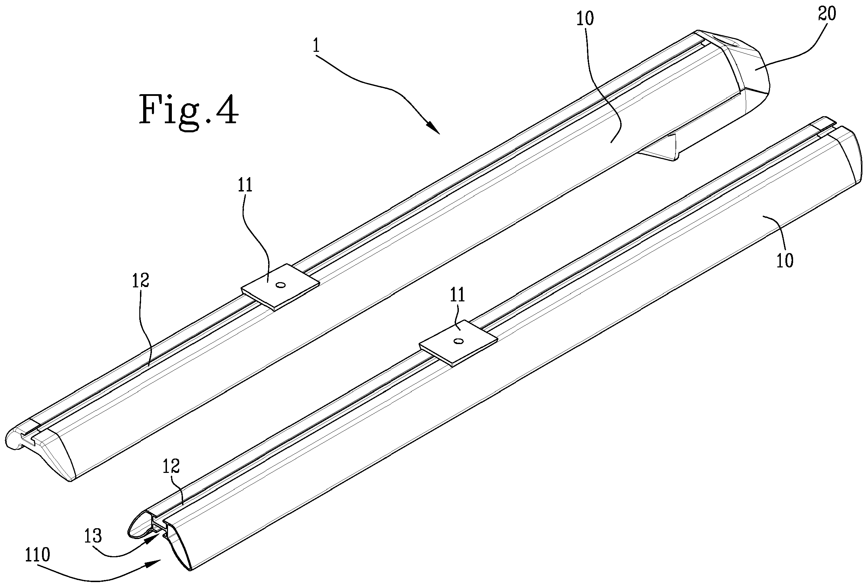

Advantageously, the cycle carrier 1 has both a use configuration wherein the segments 10 of the support element 1 are joined to each other, preferably aligned, and a non-use configuration wherein the segments 10 are separated from each other and can be placed, stored and, more in detail, located on a pallet in side-by-side configuration (as schematically illustrated in Figure 4).

In practice, the invention makes it possible to obtain a cycle carrier 1 which, in the use configuration, defines solid supports 1 for the bicycles, to be mounted, for example, on the "roof rack" 6 (Figure 3), the supports 1 of which, in the non-use configuration, are separated into two pieces 10 which, arranged side by side, may then be placed on normal type pallets, for example 80x120 cm, without therefore requiring costly logistics solutions.

Each segment 10 is preferably designed to receive a wheel of a bicycle. Each support element 1 comprises joining means 2, 3 for fixing the respective segments 10 to each other in a removable fashion, to allow changing from the use to the non-use configuration.

Preferably, the invention makes available a sort of kit consisting of two segments 10 and joining means 2, 3.

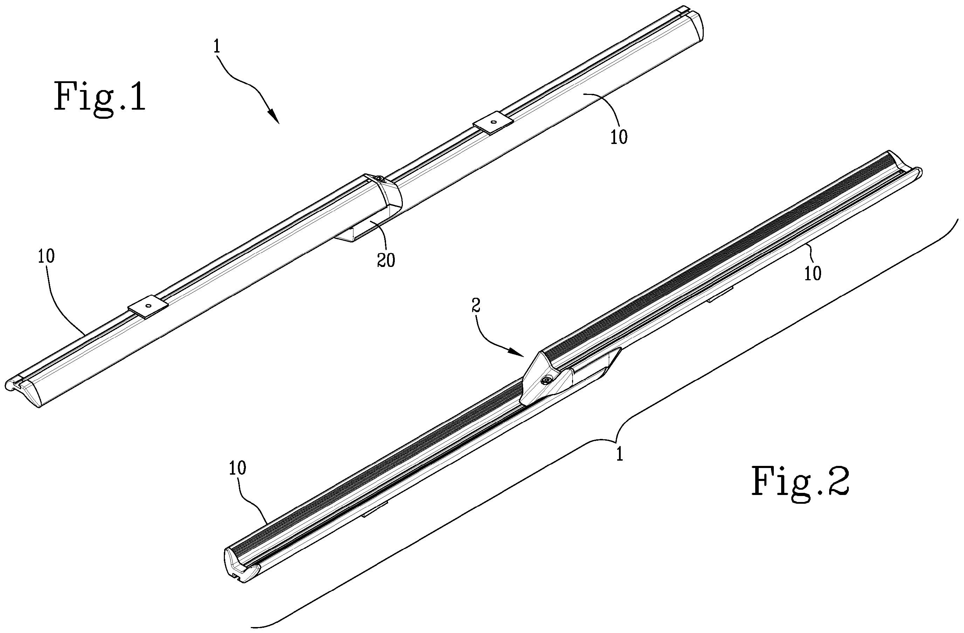

In a first embodiment, shown in Figures 1 - 7, the joining means 2 are preferably each equipped with a relative groove; in this way, in the use configuration where the segments 10 are aligned with each other by means of the joining means 2, the succession of grooves of the two segments 10 and the joining means 2, defines a guide for receiving the tyre which is substantially continuous (see for example Figure 2).

In practice, in the preferential version of the invention, the grooves of the two segments 10 are aligned and are joined by means of the groove of the joining means 2, so that it is a sort of composite groove or guide but which is substantially continuous in its extension.

In even more detail, as may be seen in Figures 4 to 7, the lower side of each segment 10 is designed to rest on the roof bars 6 (or other carrying systems) and comprises special coupling elements 11, also of known type, whilst the opposite upper side has the groove which, preferably, is defined for the entire length.

In the preferential case wherein the segments comprise a profile 10, the groove is formed in the upper side of it, whilst the coupling elements 11 are fixed to the opposite lower side.

The terms "upper" or "lower" used in this description refer to the orientation which the components of the invention adopt in use, when mounted on the vehicle, in the arrangement of Figure 3.

As in the example illustrated, metal or plastic terminals may be applied at the ends of the profiles 10 which close the inner cavity, like a cap.

Preferably, the joining means 2 of the first embodiment comprise a joining element 20, which may be made of plastic or metal, equipped with two connecting parts, each designed to be fixed in a removable fashion to an end portion a relative segment 10.

The joining element 20 can be made, for example, in a single piece and be suitably shaped to allow the connection between the segments 10 and in general perform the function of cycle carrier 1.

In practice, the joining element 20 acts as an interface between the two segments 10 and more specifically between the profiles 10 of the two segments which form the support element 1.

The joining element 20 is fixed in a releasable fashion to one of the two ends 110 of each segment 10, which can be defined as "inner", rather than the "outer" free end.

For this reason, the joining element 20 is positioned centrally with respect to the supporting element 1 and connects the two inner end portions 110 of the respective segments 10, to define a single support 1 which is able to support the bicycle, in turn resting on the on the roof rack 6.

Still more in detail, the joining element 20 comprises two opposite sides 201, 202, upper and lower, each designed to come into contact with a different segment 10 in the above-mentioned use configuration; more precisely, the upper side 201 of the joining element 20 is the one which defines the relative groove.

For this reason, the above-mentioned parts of the joining element 20 which are fixed to the respective segment 10 are one upper and the other lower.

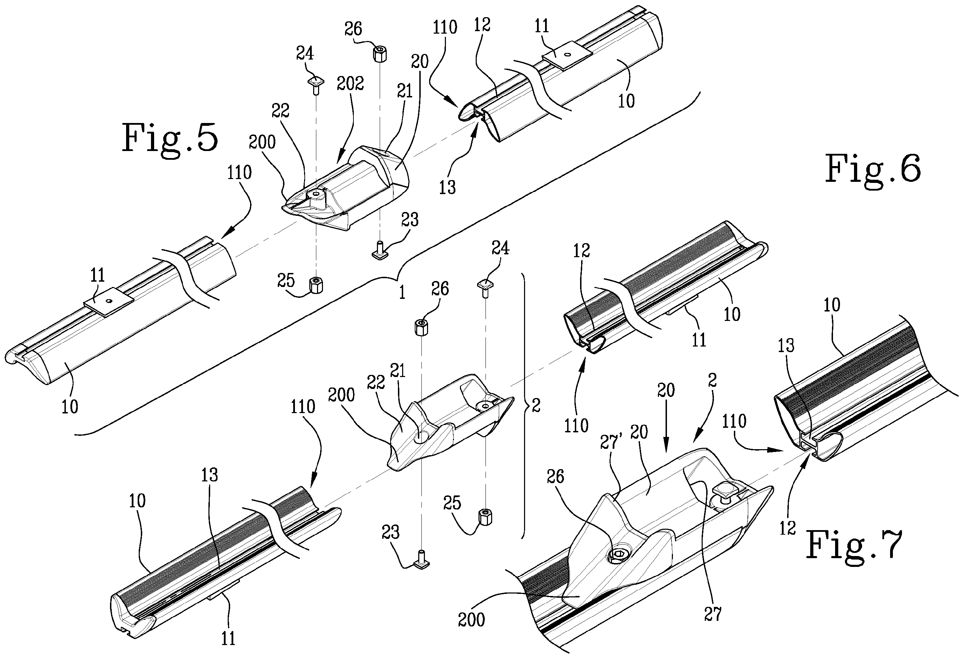

In practice, in the use configuration, the joining element 20 is positioned between the two segments 10 which it joins; preferably, the joining element 20 comprises a tapered end 200 designed to be inserted in the groove of one of the segments 10 in such a way as to extend it by the groove of the same joining element 20 (see for example Figures 2 and 7).

In other words, the joining element 20 is mounted on one of the profiles 10, with a relative end tapered and shaped 200 which inserts into the groove of the profile 10.

The end 200 is equipped with the groove of the joining element 20 which joins the groove of the lower profile and that of the profile mounted above the joining element 20, to define an upper guide which performs the same function as a single groove made in a single piece.

In a preferred embodiment, the profile 10 of each segment matches at least one shaped engaging guide 12, 13, preferably for the full length.

In practice, the guide 12, 13 may be a longitudinal cavity, provided with an axial opening groove, to form a "C" shape.

In the embodiment illustrated in the drawings, the joining element 20 comprises two through holes 21, 22, made in two parts same element 2, in which can be inserted respective screws 23, 24 provided with a head suitably shaped to be inserted in the guide 12, 13 of one of the segments 10.

In more general terms, the joining element 20 of the first embodiment of the invention is provided with two engaging members, which in the example shown are formed by the heads of the screws 23, 24, provided for coupling the respective profiles 10 to the guide 12, 13.

Clearly, a locknut 25, 26 is screwed at the end of the screw 23, 24 opposite the shaped head.

More specifically, each profile 10 comprises two shaped parallel guides 12, 13, of which one upper, made on the bottom of the groove, and the other lower, made on the lower side, separated from each other by a wall, with respect to which they are symmetrical (see Figures 5 - 7), to define an "H" profile.

Basically, the screw 24 positioned in the part of the joining element 20 which has the tapered end 200 which is inserted in the groove of the profile 10 is located with the head facing downwards, that is to say, protruding from the lower side; in this way, the head of this screw 24 enters along the upper guide 13 of the profile 10.

The other screw 23 is oriented with their head facing upwards, protruding from the upper side, in such a way that it can be inserted in the lower guide 12 of the respective profile 10.

The joining element 20 may also comprise shoulders 27', 27, made on the two lower and upper sides, internally relative to the through holes, which act as end stops for inserting the profiles 10; in practice, the shoulders 27', 27 are used as a contact element of the inner end of the profiles 10 when they are coupled to the heads for engaging the guides.

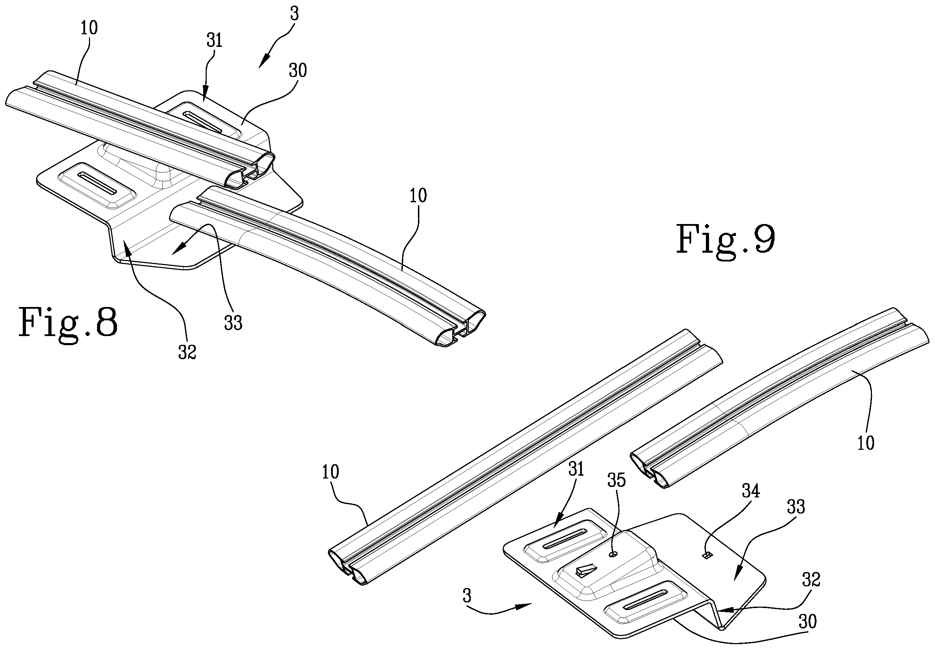

In a second embodiment, shown in Figures 8 and 9, the joining means 3 comprise a joining element 30 different from that of the first embodiment, labelled 20 in the drawings.

This alternative joining element 30 comprises an upper engaging side 31, 32, 33, to which is anchored in a removable fashion the segments 10 of the invention and a lower side, designed in use to face the roof of the vehicle 5.

It should be noted that the segments 10 of the second embodiment, of which only parts are shown in Figures 8 and 9, may be equal to those of the first embodiment or, alternatively, at least one of the profiles of a segment may have a curved shape for reasons which will be described in more detail below.

Preferably, the upper side of the joining element comprises two coupling surfaces 31, 33 designed to be removably joined to a respective segment 10; in any case, the joining surfaces 31, 33 are substantially facing the same direction, that is to say, in use, upwards and not downwards.

These surfaces 31, 33 may be adjacent or, as in the preferential example shown in Figures 8 and 9, may be separated and, for example, offset, that is to say, located on ideal planes distinct from each other, which can be parallel or incident.

More in detail, in the preferred version illustrated in the accompanying drawings, the connecting surfaces 31, 33 are joined by a transition surface 32.

Preferably, this joining element 30 is made by a plate, made of plastic or metal, forming three walls, or sub-plates or substantially planar elements, positioned in a "Z" Shape, that is to say, with an upper wall which defines the first coupling surface, labelled 31, a lower wall which defines the other coupling surface 33, and an intermediate wall, oblique or transversal relative to the upper and lower walls which joins them and defines the transition surface 32.

In this case, once connected to the respective coupling surface 31, 33, the two segments 10 are spaced away from each other and also at two different heights, at least with regard to the respective pieces which are at the joining element 30 (see Figure 8).

For this reason, at least one of the two segments 10 and more precisely the relative piece mentioned above, may be curved so as to compensate for the difference in level between the two segments 10, in such a way that the respective grooves can be on ideal planes which are not too far from each other, at least for a certain stretch of the respective length, to allow a correct placement of the wheels of the bicycle.

The assembly of the cycle carriers 1 equipped with joining means 3 according to the second embodiment is not unlike the assembly of known cycle carriers.

The segments 10 are removably joined to the joining element 30 by bolts, the thread of which passes through the holes labelled 33 and 34 in Figure 9 and in holes specially provided in segments 10.

The joining element 30 couples to the profiles of the roof bars 6 by means of a mechanical a plate (not illustrated) shaped in such a way as to be inserted exactly in a groove of the profiles of the bars 6, which is coupled to the joining element 30 and is designed to clamp to the relative bar 6 by means of a lever mechanism (not shown in the drawings as it is of known type).

## Claims

1. A cycle carrier (1) comprising at least one elongate element (1) designed to receive a least one tyre of a bicycle and comprising a plurality of segments (10), wherein the cycle carrier (1) has a configuration of use wherein the segments (10) are joined together and a configuration of non-use wherein the segments (10) are separated from each other; wherein each segment (10) is designed to receive the tyre;
wherein joining means (2) are provided for fixing the segments (10) to each other, in a removable fashion;
wherein the joining means (2) comprise a joining element (20) equipped with two connecting parts each designed to be fixed in a removable fashion to an end portion (110) of a relative segment (10);
the cycle carrier (1) being **characterized in that** the joining element (20) comprises two opposite sides (201, 202), in use upper and lower, each designed to come into contact with a different segment (10) in the above-mentioned use configuration.

2. The cycle carrier (1) according to the preceding claim, wherein at least one of the segments (10) is equipped with an upper groove designed to receive the tyre.

3. The cycle carrier (1) according to claim 1 and to the preceding claim, wherein the segments (10) and the joining means (2) are each equipped with a respective groove, the succession of aligned grooves defining a guide for receiving the tyre which is substantially continuous.

4. The cycle carrier (1) according to claim 2 or 3, wherein each segment (10) comprises a lower side designed for resting on carrying systems such as roof bars or the like and an upper side in which the groove is made.

5. The cycle carrier (1) according to any one of the preceding claims, wherein each segment comprises a profile (10).

6. The cycle carrier (1) according to the preceding claim, wherein the upper side (201) of the joining element (20) comprises a relative groove.

7. The cycle carrier (1) according to claim 1, wherein the profile (10) of each segment matches at least a shaped engaging guide (12, 13) and wherein the connecting parts of the joining element (20) each comprise a protruding engaging member designed to be inserted in the shaped guide of the relative segment (10).

8. The cycle carrier (1) according to claim 1, wherein, in the use configuration, the joining element (20) is positioned between the two segments (10) which it joins.

9. The cycle carrier (1) according to any one of claim 1, consisting of two segments (10) and joining means (2).

## Patentansprüche

1. Fahrradträger (1), zumindest ein längliches Element (1) umfassend, das dafür ausgelegt ist, zumindest einen Reifen eines Fahrrades aufzunehmen und das mehrere Segmente (10) umfasst, wobei der Fahrradträger (1) eine Gebrauchskonfiguration aufweist, in der die Segmente (10) miteinander verbunden sind, und eine Nichtgebrauchskonfiguration, in der die Segmente (10) voneinander getrennt sind; wobei jedes Segment (10) dafür ausgelegt ist, den Reifen aufzunehmen;
wobei Verbindungsmittel (2) vorgesehen sind, um die Segmente (10) abnehmbar aneinander zu befestigen;
wobei die Verbindungsmittel (2) ein Verbindungselement (20) umfassen, das mit zwei Anschlussteilen ausgestattet ist, die jeweils dafür ausgelegt sind, abnehmbar an einem Endabschnitt (110) eines jeweiligen Segments (10) befestigt zu werden;
wobei der Fahrradträger (1) **dadurch gekennzeichnet ist, dass** das Verbindungselement (20) zwei einander gegenüberliegende Seiten (201, 202) umfasst, die im Gebrauch oben und unten liegen und jeweils dafür ausgelegt sind, in der oben erwähnten Gebrauchskonfiguration in Kontakt mit einem unterschiedlichen Segment (10) zu gelangen.

2. Fahrradträger (1) nach dem vorhergehenden Anspruch, wobei zumindest eines der Segmente (10) eine für die Aufnahme des Reifens ausgelegte obere Rille aufweist.

3. Fahrradträger (1) nach Anspruch 1 und nach dem vorhergehenden Anspruch, wobei die Segmente (10) und die Verbindungsmittel (2) jeweils eine entsprechende Rille aufweisen und die Aufeinanderfolge miteinander fluchtender Rillen eine im Wesentlichen durchgehende Führung zur Aufnahme des Reifens bilden.

4. Fahrradträger (1) nach Anspruch 2 oder 3, wobei jedes Segment (10) eine untere Seite umfasst, die dafür ausgelegt ist, auf Trägersystemen wie beispielsweise Dachrelingen oder dergleichen aufzuliegen, und eine obere Seite, in der die Rille ausgeformt ist.

5. Fahrradträger (1) nach einem der vorhergehenden Ansprüche, wobei jedes Segment ein Profil (10) umfasst.

6. Fahrradträger (1) nach dem vorhergehenden Anspruch, wobei die obere Seite (201) des Verbindungselements (20) eine entsprechende Rille umfasst.

7. Fahrradträger (1) nach Anspruch 1, wobei das Profil (10) jedes Segments zumindest eine geformte Eingriffsführung (12, 13) ausgestaltet und wobei die Anschlussteile des Verbindungselements (20) jeweils ein vorstehendes Eingriffsorgan umfassen, das zur Einführung in die geformte Führung des entsprechenden Segments (10) konfiguriert ist.

8. Fahrradträger (1) nach Anspruch 1, wobei, in der Gebrauchskonfiguration, das Verbindungselement (20) zwischen den zwei Segmenten (10) angeordnet ist, die es verbindet.

9. Fahrradträger (1) nach Anspruch 1, bestehend aus zwei Segmenten (10) und Verbindungsmitteln (2).

## Revendications

1. Un support de cycle (1) comprenant au moins un élément allongé (1) destiné à recevoir au moins un pneu d'une bicyclette et comprenant une pluralité de segments (10), où le support de cycle (1) a une configuration d'utilisation dans laquelle les segments (10) sont joints l'un à l'autre et une configuration de non-utilisation dans laquelle les segments (10) sont séparés l'un de l'autre ; où chaque segment (10) est destiné à recevoir le pneu ;
où des moyens de jonction (2) sont prévus pour fixer les segments (10) l'un à l'autre, de façon amovible ;
où les moyens de jonction (2) comprennent un élément de jonction (20) muni de deux parties de raccordement dont chacune est destinée à être fixée de façon amovible à une portion d'extrémité (110) d'un segment (10) correspondant ;
le support de cycle (1) étant **caractérisé en ce que** l'élément de jonction (20) comprend deux côtés opposés (201, 202), en utilisation supérieur et inférieur, dont chacun est destiné à venir en contact avec un segment (10) différent dans la configuration d'utilisation susmentionnée.

2. Le support de cycle (1) selon la revendication précédente, dans lequel au moins l'un des segments (10) est muni d'une gorge supérieure destinée à recevoir le pneu.

3. Le support de cycle (1) selon la revendication 1 et la revendication précédente, dans lequel les segments (10) et les moyens de jonction (2) sont munis chacun d'une gorge respective, la succession des gorges alignées définissant un guide de réception du pneu qui est essentiellement continu.

4. Le support de cycle (1) selon la revendication 2 ou 3, dans lequel chaque segment (10) comprend un côté inférieur destiné à reposer sur des systèmes de portage tels que des barres de toit ou similaires et un côté supérieur dans lequel la gorge est réalisée.

5. Le support de cycle (1) selon l'une quelconque des revendications précédentes, dans lequel chaque segment comprend un profilé (10).

6. Le support de cycle (1) selon la revendication précédente, dans lequel le côté supérieur (201) de l'élément de jonction (20) comprend une gorge respective.

7. Le support de cycle (1) selon la revendication 1, dans lequel le profilé (10) de chaque segment correspond au moins à un guide profilé d'assujettissement (12, 13) et dans lequel les parties de raccordement de l'élément de jonction (20) comprennent chacune un organe d'assujettissement en saillie destiné à être inséré dans le guide profilé du segment (10) correspondant.

8. Le support de cycle (1) selon la revendication 1, dans lequel, dans la configuration d'utilisation, l'élément de jonction (20) est positionné entre les deux segments (10) qu'il joint.

9. Le support de cycle (1) selon la revendication 1, constitué de deux segments (10) et de moyens de jonction (2).
